# EUROPÄISCHE PATENTSCHRIFT

(11) **EP 2 585 190 B1**
(45) Veröffentlichungstag und Bekanntmachung des Hinweises auf die Patenterteilung: **13.07.2016**
(21) Anmeldenummer: 11730203.4
(22) Anmeldetag: 21.06.2011
(51) Int. Cl.: B01D 29/01, B01D 29/11, B01D 46/00

(54) **VERFAHREN ZUR HERSTELLUNG EINES FILTERELEMENTS UND FILTERELEMENT**
METHOD FOR PRODUCING A FILTERING ELEMENT AND FILTER ELEMENT
PROCÉDÉ DE PRODUCTION D'UN ÉLÉMENT FILTRANT ET ÉLÉMENT FILTRANT

(30) Priorität: 23.06.2010 DE 102010025217
(43) Veröffentlichungstag der Anmeldung: 01.05.2013
(73) Patentinhaber: Hydac Filtertechnik GmbH, 66280 Sulzbach/Saar (DE)
(72) Erfinder: SCHWENDER, Matthias, 66459 Kirkel (DE); SCHMITZ, Andreas, 66459 Kirkel (DE); KOCH, Edwin, 66636 Tholey (DE)
(74) Vertreter: Bartels, Martin Erich Arthur
(86) Internationale Anmeldenummer: PCT/EP2011/003045
(87) Internationale Veröffentlichungsnummer: WO 2011/160808

(56) Entgegenhaltungen:
- WO-A1-99/26711
- CH-A- 504 885
- DE-A1- 10 144 867
- FR-A1- 2 518 893
- US-A1- 2008 016 836
- US-A1- 2008 230 464

## Beschreibung

Die Erfindung betrifft ein Verfahren zur Herstellung eines Filterelements gemäß dem Oberbegriff des Patentanspruchs 1.

Filterwerkstoffe zur Herstellung von austauschbaren Filterelementen in hydraulischen Anlagen sind in mannigfacher Ausgestaltung bekannt und bestehen beispielsweise aus einem Faservlies mit einer Stützstruktur auf ein oder beiden Seiten (Anström- oder Abströmseite). Solche Filterelemente werden beispielsweise von einer zu filtrierenden Hydraufikflüssigkeit durchströmt, wobei sich von der Schmutzseite zu der Reinseite eine zum Teil beträchtliche Druckdifferenz ergibt. Um dieser Druckdifferenz und auch dynamischen Strömungskräften in dem Unfiltrat standhalten zu können, weisen die Filterwerkstoffe, aus denen entsprechende Filterelemente gefertigt sind, sog. Stutzstrukturen auf. Solche Stützstrukturen unterliegen einer starken Druckwechselbelastung im Betrieb eines Filterelementes. Bekannte Stützstrukturen sind aus Metallgittern oder Lochblechen gebildet. Solche Filterelemente mit einer Stützstruktur aus einem Metallgitter sind nicht ohne weiteres kostengünstig hersterlbar und montierbar. Zudem können unter Umständen Brüche an der Stützstruktur auftreten.

Die DE 200 13 8399 U1 beschreibt einen Filterwerkstoff, der eine Stützschicht aufweist, auf die ein Faservlies mittels eines Nadelungsprozesses aufgebracht ist. Die Stützschicht ist als Gewebe oder Gelege ausgebildet, wobei ein Teil der Fäden des Gewebes aus einem elektrisch leitfähigen Material, vorzugsweise aus Metall gebildet ist. Die übrigen Fäden sind aus einem Kunststoffmaterial gebildet, ebenso wie das Faservlies selbst. Es handelt sich bei dem gattungsgemäßen Filterwerkstoff somit um einen textilen, teilweise gewobenen Verbundwerkstoff, der aufgrund der Art der Verbindung von Stützschicht und Faservlies grundsätzlich zum Delaminieren neigt.

Aus der US 2008/0230464 A1 ist es bekannt, einen Filterwerkstoff beidseitig mit einer Struktur aus leitfähiger Paste zu bedrucken, wobei die Paste ein Bindemittel aufweist, um einen sicheren Halt an dem Filtermaterial zu gewährleisten.

Aus EP 1 740 288 B1 ist ein Verfahren bekannt, bei dem über Düsen eine flüssige Masse netzförmig auf die Außenseite eines zylinderförmigen Filterelement aufgebracht wird. Bei einem aus DE 101 44 867 A1 bekannten Filterelement und dem Verfahren zu seiner Herstellung wird ein Filtermedium mit einem Stützgitter mittels eines Sprühklebers vollständig verklebt, wobei sich ein Verbund aus dem Stützgitter nebst dem Filtermedium ergibt. Alternativ kann zur festen Verbindung ein Klebegitter vorgesehen sein, mittels dessen das Stützgitter mit dem Filtermedium verklebt und der Verbund ausgebildet wird. Bei den bekannten Verfahren wird ein Filterwerkstoff zu einem Filterelement aufgefaltet und die Stützschicht auf das Filterelement aufgebracht.

Aus der FR 2 518 893 A1 ist ein gattungsgemäßes Verfahren zur Herstellung eines Filterelements bekannt, welches die folgenden Schritte aufweist:
- Bereitstellung eines flächenförmigen Filterwerkstoffes,
- Formen des Filterwerkstoffes zu einem einen Fluidraum definierenden Filterelement,
- Bereitstellung einer zumindest bereichsweise flächig am Filterwerkstoff anliegenden Stützschicht,
- wobei die Stützschicht durch Aufbringen eines flüssigen, aushärtenden Materials mit einer variablen Gitterstruktur gebildet wind,
- wobei das Material für die Stützschicht Kunststoff ehthält,
- wobei die Stützschicht auf den flächenförmigen Filterwerkstoff aufgebracht wird,
- wobei nach dem zumindest teilweise Aushärten des Kunststoffmaterials der Filterwerkstoff mit aufgebrachter Stützschicht zum Filterelement geformt wird, und.
- wobei das Kunststoffmaterial für die Stützschicht mit Hilfe eines Extruders als Heißschmelze einer Verteileinrichtung zugeführt und mit der Verteileinrichtung als Gewebe- oder Fadenstruktur auf den Filterwerkstoff aufgetragen wird.

Das aus der FR 2 518 893 A1 bekannte Verfahren erfordert zur Herstellung einer Stützstruktur mit einer aus sich kreuzenden Fäden (Stützlinien) gebildeten Gitterstruktur, dass zunächst mittels Extruderdüsen parallele Fäden auf den Filterwerkstoff aufgebracht werden. Der so mit einer Fadenstruktur versehene flächenförmige Filterwerkstoff ist anschließend in einer von der Richtung der ausgebildeten Fäden abweichenden Richtung aufzurollen und erneut mittels Extrudern sind parallele Fäden aufzubringen, um zu einer Gitterstruktur zu gelangen. Dies stellt zum einen einen erheblichen Arbeitsaufwand dar, zum anderen wird durch dieses Vorgehen, bei dem zunächst abzuwarten ist, bis die in der ersten Etappe ausgebildeten parallelen Fäden erkaltet sind, nur eine geringe Festigkeit der dergestalt ausgebildeten gitterförmigen Stützstruktur erreicht, da keine innige Verbindung der sich kreuzenden Fäden miteinander gebildet werden kann.

Aus der US 2008/0016836 A1 ist es bekannt mittels mehrerer mit einer vorgebbaren Kinetik bewegter Düsen eine flüssige Masse auf ein zylindrisches Filterelement aufzutragen, die beim Abkühlen erhärtet, so dass sich eine gitterartige Stützstruktur für das zylindrische Filterelement bildet.

Demgegenüber stellt sich die Erfindung die Aufgabe, ein Verfahren anzugeben, mittels dessen in einfacher und kostengünstiger Weise ein Filterelement mit verbesserter Formstabilität und Festigkeitswerten und einer sicher daran angebrachten Stützschicht hergestellt werden kann.

Diese Aufgabe wird gelöst durch ein Verfahren mit den Merkmalen des Patentanspruchs 1 in seiner Gesamtheit.

Dadurch dass gemäß dem kennzeichnenden Teil von Patentanspruch 1 als Verteileinrichtung eine oder mehrere, mit einer vorgebbaren Kinetik bewegte Düsen oder Düsenbalken zum Aufbringen der Heißschmelze auf dem Filterwerkstoff verwendet werden, wird das Kunststoffmaterial für die Stützschicht über die mit Spinndüsen oder ähnlichen Düsen versehene Verteileinrichtung als Gewebe- oder Fadenstruktur auf das Filtervlies oder den Filterwerkstoff auftragen. In Abhängigkeit von der Kinetik der unter den Düsen bewegten Filtervliesbahnen oder dem Filterwerkstoff oder in Abhängigkeit von der Düsenbewegung lassen sich verschiedenartige Filterstrukturen darstellen. Insoweit läßt sich die gleichmäßig über die Fläche des Filterwerkstoffes bestehende Klebeverbindung zu der Stützschicht auch als Heißklebeverbindung ausführen.

Erfindungsgemäß ist vorgesehen, dass die Dicke der die Stützschicht bildenden Fäden über die Fläche des Filterwerkstoffes variiert. Die Dicke der Kunststoff-Fäden, die die Stützschicht bilden, läßt sich insbesondere mit einer Extrudiereinrichtung mit Düsen örtlich über die Fläche des Filterwerkstoffes variieren. Dabei kann es vorteilhaft sein, den Volumenstrom an Heißschmelze durch die Verteileinrichtung zu variieren und/oder die Relativgeschwindigkeit zwischen der mit einer Stützschicht zu versehenden Lage Filtervlies und der Verteileinrichtung zu variieren, um dergestalt eine unterschiedliche Fadendicke zu erhalten.

Vorteilhafte Varianten des erfindungsgemäßen Verfahrens sind Gegenstände der Unteransprüche.

Die Stützschicht wird durch Aufbringen eines flüssigen, aushärtenden Kunststoffmaterials mit einer variablen Gitterstruktur auf einen flächenförmigen Filterwerkstoff ausgebildet und nach zumindest teilweisem Aushärten des Kunststoffmaterials wird der Filterwerkstoff mit aufgebrachter Stützstruktur zu einem einen Filterraum definierenden Filterelement geformt.

Dadurch, dass die Stützschicht mit Hilfe einer flächigen, über zumindest einen Teil der Fläche, vorzugsweise über die gesamte Fläche des Filterwerkstoffes reichenden Kunststoffverbindung mit dem Filtervlies oder einem anderen gewählten Filterwerkstoff verbunden ist, ist eine dauerhafte feste Verbindung der genannten Strukturen geschaffen, die eine höhere Festigkeit bei geringerer Materialstärke der Stützschicht erlaubt. Der so gebildete Filterwerkstoff aus ein- oder beidseitig auf ein Filtervlies oder dergleichen aufgebauten Stützschicht ist zu Filterelementen weiterverarbeitbar, die eine sehr gute Formstabilität auch bei wechselnden Druckbelastungen in einem zu reinigenden Fluid aufweisen.

Die Stützschicht kann in einem Arbeitsgang ausgebildet und mit dem Filtervlies verbunden werden, indem ein flüssiges Kunststoffmaterial in Fadenoder Faserform auf das Filtervlies aufgebracht wird und dabei durch Klebung anhaftet und anschließend dort aushärtet. So lassen sich durch die Art der Ausrichtung der Kunststoff-Fäden variable Filterstrukturen bilden.

Zur Darstellung der Stützschicht eignen sich beispielsweise polyalkylenterephtalat-Kunststoffe (PET, PBT) sowie deren Co-Polykondensate, die zwar nur eine mittlere Festigkeit, aber hohe Steifigkeit und Härte besitzen. Teilkristallines Polyethylenterephtalat weist thermische Einsatzgrenzen bei-20°C bis etwa 100°C kurzzeitig bis 200°C auf. Sie sind beständig gegen verdünnte Säuren, aliphatische und aromatische Kohlenwasserstoffe, Öle, Fette, Ester und Alkohole. Polybutylenterephtalat (PBT) besitzt im Vergleich zu PET etwas geringere Festigkeit; seine Einsatzgrenzen liegen bei etwa -40°C bis + 125°C. Es eignen sich weiter zur Stützschicht-Herstellung auch isotaktische Polypropylen-Kunststoffe, wobei isotaktisches Polypropylen bis etwa 150°C einsetzbar ist und chemisch sich als sehr beständig erweist.

In die Stützschicht lassen sich zusätzlich oder als Ersatz für Kunststoff-Fadensysteme Fäden aus elektrisch leitfähigem Material einweben oder einbringen. Es sind jedoch vorzugsweise lang ausgebildete Fäden und nicht Kurzfasern od. dgl. im Einsatz, die insoweit einen einwandfreien Ladungstransport von dem Filterwerkstoff zu einem Massekontakt in der Umgebung des mit dem Filterwerkstoff gebildeten Filterelements ermöglichen. Die Abstände der elektrisch leitenden Fasern voreinander können vorzugsweise gleich sein, z.B. einen Abstand von etwa 2 cm zueinander einnehmen. Geeignet sind insbesondere Kohlefasern als auch Metallfasern, die inert gegenüber den zu filternden Fluiden sind.

Die Stützschicht kann in Leinwandbindung mit einer Maschenweite von etwa 850 µm oder 1200 µm Maschenweite und mit einer Fadendicke von 250 µm gebildet sein. Die Fadendicke in Kett- und Schußrichtung kann unterschiedlich sein. So kann beispielsweise in Schußrichtung ein Faden von 250 µm Dicke und in Kettrichtung ein Faden von 200 µm Dicke gewählt sein. Die Stützschicht kann auch in Atlas- oder Köperstruktur oder in Rautenform angeordnete Fäden aufweisen. Dabei kann die Maschenweite bei einem besonders bevorzugten Ausführungsbeispiel in einer Richtung etwa 1600 µm und in der anderen Richtung etwa 4300 µm betragen. Besonders die rautenförmige Anordnung der Fäden zueinander ergibt eine gute Durchströmbarkeit bei gleichzeitig guter Abstützung, was zu einer erhöhten Druckstabilität für das gesamte Filterelement führt. Bei plissierten Filterelementen kann beispielsweise die Stützschicht auf dem Filtervlies derart ausgerichtet sein, dass der dickere Fäden die Falten des Filterelementes quer überspannt und insoweit einen guten Beitrag zur Abstandhaltung der Falten bildet.

Im Folgenden wird das erfindungsgemäße Verfahren anhand eines Ausführungsbeispiels nach der Zeichnung näher erläutert. In der Zeichnung zeigt
- Fig.1: eine perspektivische, schematische Ansicht eines in einem Extrusionsverfahren gebildeten Filterwerkstoffes;
- Fig.2: eine schematische Draufsicht auf eine Stützschicht, wie sie mit der Vorrichtung in Fig.1 auf ein Filtervlies aufgebracht ist;
- Fig.3: einen im Mikroskop vergrößert dargestellten Ausschnitt eines Filterwerkstoffes;
- Fig.4: einen im Mikroskop vergrößert dargestellten Ausschnitt eines Filterwerkstoffes mit einem elektrisch leitfähigen Faden aus Kohlefaser;
- Fig.5: eine im Mikroskop vergrößerte Draufsicht auf eine Stützschicht mit rautenförmiger Maschenahordnung.

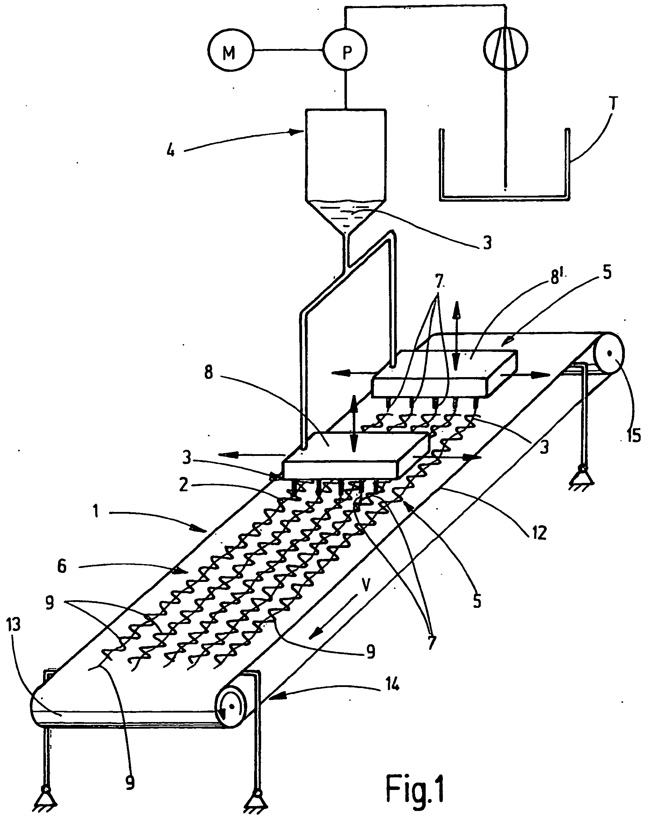

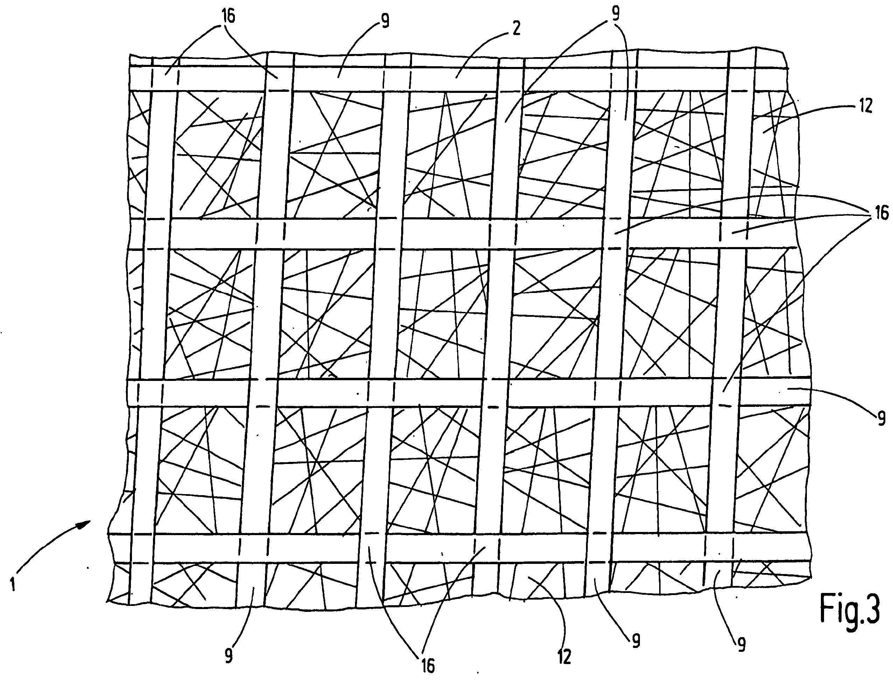

In der Fig.1 ist in einer schematisch dargestellten perspektivischen Ansicht ein Filterwerkstoff 1 als endlose Wickelware gezeigt, der mit Hilfe von durch ein Extrudierverfahren hergestellten Kunststoff-Fäden 9 belegt wird, wobei hierdurch eine Stützschicht 2 auf dem Filterwerkstoff 1 aufgebracht wird. Die Stützschicht 2 dient unter anderem zur Aussteifung des im wesentlichen als Kunststoff-Filtervlies 12 gebildeten Filterwerkstoffes 1 und wird in dem gezeigten Ausführungsbeispiel durch Heißklebung aufgebracht, wobei ein Düsenbalken 8 mit Spinn- und Verteildüsen 7 ein gleichmäßiges Fadenmuster oder Fadenstruktur 6 in der Kettrichtung und ein weiterer Düsenbalken 8' in Schußrichtung aufbringen, so dass beispielsweise ein in Fig.3 gezeigtes Rechteckmuster von übereinandergelegten Kunststoff-Fäden 9 gebildet wird. Die Kunststoff-Fäden 9 sind dann im fertigen, abgelegten Zustand an den Knotenpunkten durch Verschmelzen fest miteinander verbunden. Das Filtervlies 12 wird dabei als Endlosware von einer Walze 13 an einem jeweiligen Ende einer Wickelvorrichtung 14 zu einer gegenüberliegenden Walze 15 umgespult und derart transportiert.

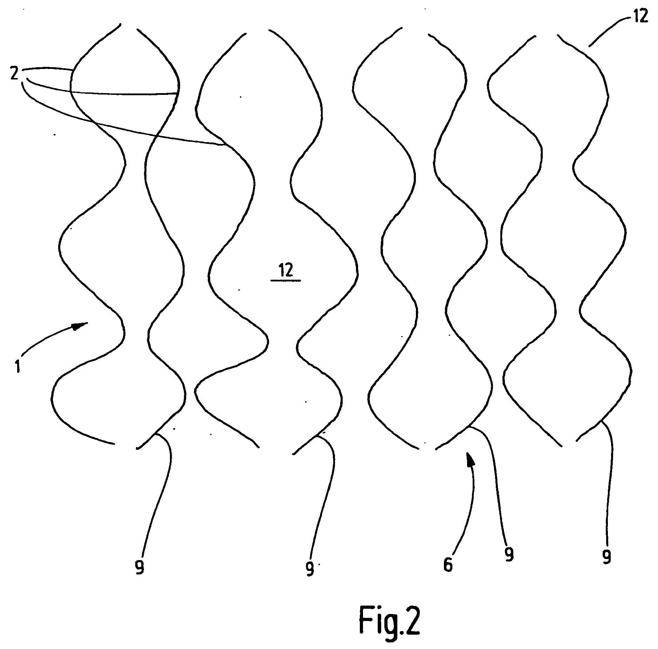

Die Kinetik der Düsenbalken 8,8', die zusammen die Verteileinrichtung. 5 für die Kunststoff-Heißschmelze bilden, ist bevorzugt frei um alle drei Achsen veränderbar und wird von einer nicht dargestellten Rechnereinheit angesteuert. So läßt sich beispielsweise eine wellenförmige Anordnung der Fäden 9, wie in Fig.2 gezeigt, realisieren. Dies stellt eine konstruktive Maßnahme dar, die Steifigkeit des Filterwerkstoffes 1 in bestimmten Richtungen zu erhöhen und die Biegsamkeit wiederum in anderer Richtung zu verbessern. Dadurch läßt sich ein Filterwerkstoff 1 schaffen, der in Bezug auf seine Steifigkeit an den Einsatzorten und an die Einsatzweise betreffend die Gestalt eines Filterelementes optimal angepaßt werden kann. Der konstruktive Aufwand zur diesbezüglichen. Optimierung eines Filterwerkstoffes ist aus prozeßtechnischer Sicht heraus minimiert.

Die Aufbringung der Stützschicht in dem in Fig.1 aufgezeigten erfindungsgemäßen Verfahren kann einseitig oder beidseitig auf das Filtervlies 12 erfolgen und die Fadendicke kann beispielsweise durch die Vorschubgeschwindigkeit der sich unter der Verteileinrichtung 5 wegbewegenden Filtervliesbahn innerhalb vorgebbarer Bereichswerte eingestellt werden. In der Fig.3 ist eine Fadenstruktur 6 in der Art einer Leinwandbindung gezeigt, wobei die Einzelfäden 9 aus geschmolzenem und wieder erstarrtem Kunststoff nicht verwoben, sondern an den Berührpunkten wiederum unter Bildung von Knotenpunkten 16 oder Knotenstellen miteinander verschmolzen sind. Es ergibt sich hier eine Rechteck-Filtermusterstrukfur mit einer ersten Maschenweite von etwa 1200µm und einer zweiten, quer dazu orientierten Maschenweite von etwa 880 µm.

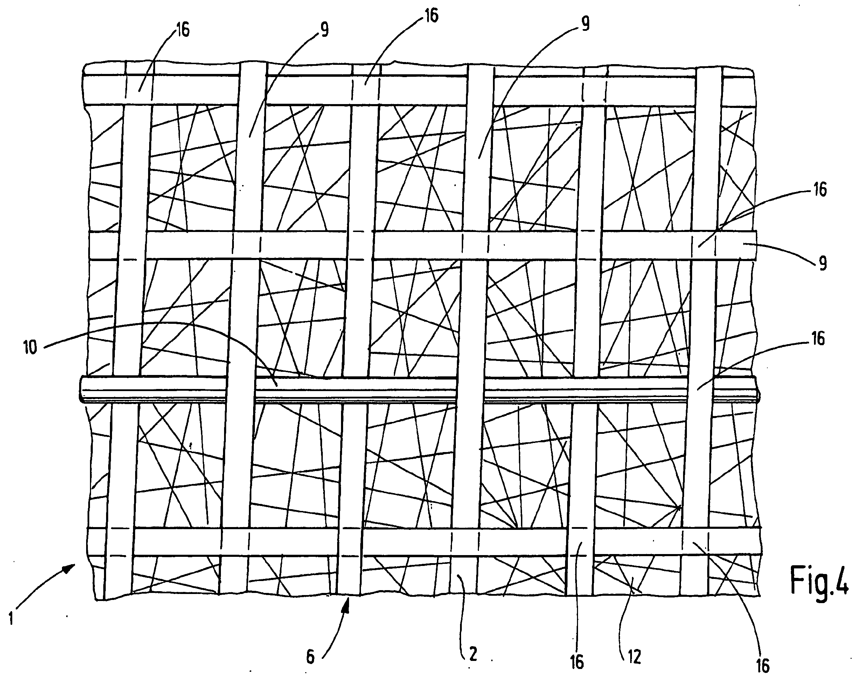

Zur Ableitung von elektrostatischen Ladungen im Betrieb von Filterelementen mit einer derartigen erfindungsgemäßen Stützschicht 2 ist vorgesehen, einzelne Fäden 9, die zusätzlich oder als Ersatz (vgl. Fig.6) für die Kunststoff-Fäden dienen, mit elektrostatischer Leitfähigkeit einzusetzen. In der Fig.4 ist beispielhaft ein Kohlefaserfaden 10 gezeigt, der sich über die gesamte Länge/Breite des Filterwerkstoffes 1 erstreckt und der eine sichere Ableitung von Ladungen an ein Masseteil eines nicht näher dargestellten Filterelementes ermöglicht.

Die in den Fig. 3 und 4 gezeigten Ausführungsbeispiele zeigen unterschiedlich dicke Kett- und Schußfädenausführungen, wobei die Kettfäden etwa 200 µm Dicke und die Schußfäden etwa 250 µm Dicke aufweisen sollen. So können bei plissierten Filterwerkstoffen die Fäden 9, die durch die Faltentäler gehen, dünner ausgeführt sein, als die in Richtung der Falten ausgerichteten Fäden 9 der Stützschicht 2.

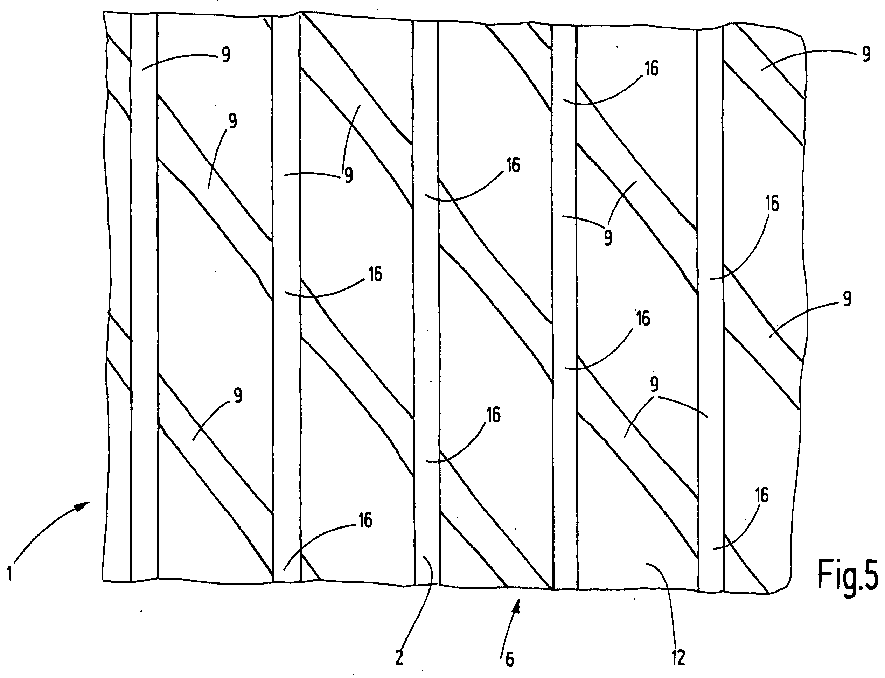

Fig. 5 zeigt eine rautenförmige Maschenanordnung der Fäden 9 mit einer etwa doppelt bzw. halb so langen Maschendiagonale wie die jeweilige an. dere Maschendiagonale. Solche Webmuster oder Fadenmuster haben den Vorteil der verbesserten Durchströmbarkeit für Öl. Es ergibt sich eine Durchströmung mit geringer Verwirbelung und somit einem geringerem Druckabfall an einem Filterelement. Zur Herstellung des Rautenmusters nach der Fig. 5 dient vorzugsweise ein Herstellverfahren, wie es für die Fadenauftraglösung nach der Fig. 2 aufgezeigt ist.

Mit den vorstehend genannten Maßnahmen verfügt die Filtermatte durch das aufgebrachte Laminat in Form einer Stützschicht 2 über eine verbesserte Durchflußwechselermüdungsstabilität. Ferner ist das Durchflußverhalten an Fluid bei hohen Viskositäten durch stabilere Strömungskanäle in der Stützschicht 2 gewährleistet. Durch eine Minimierung der Fadenvereinzelung bei der Fertigung sowie der Möglichkeit der Lagenreduzierung (aus zwei Lagen wird eine Lage) werden die Herstellkosten und der Aufwand entsprechend reduziert, wobei auch mit dazu beiträgt, dass sich höhere Faltgeschwindigkeiten in der Produktion durch die erreichte Längs- und Querstabilität bei der Herstellung des Filterelementes erreichen lassen. Wie dargelegt, kann für eine elektrische Ableilung das Laminat auch metallfrei, sein; was aber nicht zwingend notwendig ist.

Da das angesprochene Laminat gebildet aus der Stützschicht 2 und dem Filterwerkstoff 1 dünner ausgebildet ist, als wenn zwei Einzellagen mit entsprechenden Eigenschaften in konventioneller Weise verwendet werden, lassen sich insgesamt aus dem Laminat unter Bildung des Filtermaterials mehr Falten pro Flächeneinheit in das Filterelement einbringen. Damit steht nicht nur eine höhere Filterfläche zur Verfügung und das Laminat hat zusätzlich eine verbesserte Drainagefunktion gegenüber den ansonsten zu betrachteten beiden Einzellagen, was sich zusätzlich in einem niedrigeren Differenzdruck widerspiegelt, so dass das zu filternde Fluid mit geringerem Widerstand das Laminat durchströmen kann.

Die angesprochene Laminierung kann nicht nur über einen Sprühauftrag im Sinne eines Heißklebeauftrags erfolgen. Möglich wäre auch, eine eigenständige, gegebenenfalls perforierte Klebelage zwischen die aufzulaminierende Stützschicht 2 und den Grund-Filterwerkstoff 1 einzubringen, die dann entweder selbstklebend oder wiederum durch Hitze das Gewebe 2 mit dem Vlies 12 als Filterwerkstoff 1 verbindet.

## Patentansprüche

1. Verfahren zur Herstellung eines Filterelements zur Filtration von Fluiden, umfassend die Schritte:
- Bereitstellung eines flächenförmigen Filterwerkstoffes (1),
- Formen des Filterwerkstoffes (1) zu einem einen Fluidraum definierenden Filterelement,
- Bereitstellung einer zumindest bereichsweise flächig am Filterwerkstoff (1) anliegenden Stützschicht (2),
- wobei die Stützschicht (2) durch Aufbringen eines flüssigen, aushär- tenden Materials (3) mit einer variablen Gitterstruktur gebildet wird,
- wobei das Material (3) für die Stützschicht (2) Kunststoff enthält,
- wobei die Stützschicht (2) auf den flächenförmigen Filterwerkstoff (3) aufgebracht wird;
- wobei nach dem zumindest teilweise Aushärten des Kunststoffmatterials (3) der Filterwerkstoff (1) mit aufgebrachter Stützschicht (2) zum Filterelement geformt wird, und
- wobei das Kunststoffmaterial (3) für die Stützschicht (2) mit Hilfe eines Extruders (4) als Heißschmelze einer Verteileinrichtung (5) zugeführt und mit der Verteileinrichtung (5) als Gewebe- oder Fadenstruktur (6) auf den Filterwerkstoff (1) aufgetragen wird,
- **dadurch gekennzeichnet, dass** als Verteileinrichtung (5) eine oder mehrere, mit einer vorgebbaren Kinetik bewegte Düsen (7) oder Düsenbalken (8, 8') zum Aufbringen der Heißschmelze auf dem Filterwerkstoff (1) verwendet werden und dass die Dicke der die Stütztschicht (2) bildenden Fäden (9) über die Fläche des Filterwerkstoffes (1) variiert.

2. Verfahren nach Anspruch 1, **dadurch gekennzeichnet, dass** die Stützschicht (2) auf der gesamten Fläche des Filterwerkstoffes (1) aufgebracht wird.

3. Verfahren nach einem der vorhergehenden Ansprüche, **dadurch gekennzeichnet, dass** auf beiden Seiten des flächenförmigen Filterwerkstoffes (1) jeweils eine Stützschicht (2) aufgebracht wird.

4. Verfahren nach Anspruch 1, **dadurch gekennzeichnet, dass** die Dicke der die Stützschicht (2) bildenden Fäden (9) durch die Variation der Relativgeschwindigkeit zwischen dem Filterwerkstoff (1) und der Verteileinrichtung (5) und/oder durch die Variation des Volumenstromes der Heißschmelze variierbar ist.

5. Verfahren nach einem der vorhergehenden Ansprüche, **dadurch gekennzeichnet, dass** das Kunststoffmaterial (3) für die Stützschicht (2) Polyalkylenterephtalat-Kunststoff oder Polypropylen- oder Polyethylen-Kunststoff enthält.

6. Verfahren nach einem der vorhergehenden Ansprüche, **dadurch gekennzeichnet, dass** in die Stützschicht (2) Fäden (9) aus einem elektrisch leitfähigen Material eingebracht werden:

7. Verfahren nach Anspruch 6, **dadurch gekennzeichnet, dass** die elektrisch leitfähigeh Fäden (9) aus Kohlefaser (10) oder einer Metallfaser (11) gebildet sind.

8. Verfahren nach einem der vorhergehenden Ansprüche, **dadurch gekennzeichnet, dass** die Fadendicke der Stützschicht (2) zwischen 200 µm und 250 µm beträgt.

9. Verfahren nach einem der vorhergehenden Ansprüche, **dadurch gekennzeichnet, dass** die Stützschicht (2) eine Rechteckstruktur mit einer ersten Maschenweite von etwa 1200 µm und einer zweiten, quer dazu orientierten Maschenweite von etwa 800 µm aufweist.

10. Verfahren nach eiriem der Ansprüche 1-8 **dadurch gekennzeichnet, dass** die Stützschicht (2) eine Atlas- oder Köperstruktur oder Rautenform mit einer Maschenweite in einer Richtung von etwa 1600 µm und in der anderen Richtung von etwa 4300 µm aufweist.

11. Filterelement, hergestellt nach einem Verfahren nach einem der vorhergehenden Ansprüche, mit einer Vielzahl von einzelnen Filterfalten.

12. Filterelement nach Anspruch 11, **dadurch gekennzeichnet, dass** das Filterelement einen im Wesentlichen zylindrischen Filterraum definiert.

## Claims

1. A method for the production of a filtering element for the filtration of fluids, comprising the steps:
- providing a sheet-like filtering material (1),
- shaping the filtering material (1) to form a filtering element defining a fluid space,
- providing a supporting layer (2) which rests flat against the filtering material (1) at least in regions,
- the supporting layer (2) being formed by applying a liquid curing material (3) with a variable lattice structure,
- the material (3) for the supporting layer (2) containing plastic,
- the supporting layer (2) being applied to the sheet-like filtering material (3),
- after the at least partial curing of the synthetic material (3), the filtering material (1) with the applied supporting layer (2) being shaped to form the filtering element, and
- the synthetic material (3) for the supporting layer (2) being delivered to a distributing device (5) with the aid of an extruder (4) as hot melt and being applied to the filtering material (1) as a fabric or thread structure (6) with the distributing device (5).
- **characterised in that** one or a number of nozzles (7) or nozzle bars (8, 8') moved by pre-specifiable kinetics are used as a distributing device (5) in order to apply the hot melt to the filtering material (1), and that the thickness of the threads (9) forming the supporting layer (2) varies over the surface of the filtering material (1).

2. The method according to Claim 1, **characterised in that** the supporting layer (2) is applied to the entire surface of the filtering material (1).

3. The method according to any of the preceding claims, **characterised in that** a supporting layer (2) is respectively applied to both sides of the sheet-like filtering material (1).

4. The method according to Claim 1, **characterised in that** the thickness of the threads (9) forming the supporting layer (9) can be varied by varying the relative speed between the filtering material (1) and the distributing device (5) and/or by varying the volumetric flow of the hot melt.

5. The method according to any of the preceding claims, **characterised in that** the synthetic material (3) for the supporting layer (2) contains polyalkylene terephthalate plastic or polypropylene or polyethylene plastic.

6. The method according to any of the preceding claims, **characterised in that** threads (9) made of an electrically conductive material are introduced into the supporting layer (2).

7. The method according to Claim 6, **characterised in that** the electrically conductive threads (9) are formed from carbon fibre (10) or a metal fibre (11).

8. The method according to any of the preceding claims, **characterised in that** the thread thickness of the supporting layer (2) is between 200 µm and 250 µm.

9. The method according to any of the preceding claims, **characterised in that** the supporting layer (2) has a rectangular structure with a first mesh width of approximately 1200 µm and a second mesh width orientated transversely to the latter of approximately 800 µm.

10. The method according to any of Claims 1 to 8, **characterised in that** the supporting layer (2) has an atlas or body structure or a diamond shape with a mesh width in one direction of approximately 1600 µm and in the other direction of approximately 4300 µm.

11. A filtering element produced by a method according to any of the preceding claims, having a plurality of individual filter folds.

12. The filtering element according to Claim 11, **characterised in that** the filtering element defines a substantially cylindrical filter space.

## Revendications

1. Procédé de fabrication d'un élément filtrant pour filtrer des fluides, comprenant les stades dans lesquels :
- on se procure un matériau (1) de filtre plat,
- on transforme le matériau (1) de filtre en un élément filtrant définissant un espace pour du fluide,
- on se procure une couche (2) d'appui s'appliquant au moins par endroit à plat au matériau (1) de filtre,
- dans lequel on forme la couche (2) d'appui en déposant une matière (3) liquide durcissable et ayant une structure de réseaux variable,
- dans lequel la matière (3) de la couche (2) d'appui contient de la matière plastique,
- dans lequel on dépose la couche (2) d'appui sur le matériau (3) de filtre plat,
- dans lequel, après le durcissement au moins en partie de la matière (3) plastique, on transforme en l'élément filtrant le matériau (1) de filtre sur lequel est déposée la couche (2) d'appui et
- dans lequel on apporte à un dispositif (5) répartiteur la matière (3) plastique de la couche (2) d'appui à l'aide d'une extrudeuse (4) sous la forme d'une masse fondue chaude et on la dépose sur la matériau (1) de filtre sous la forme d'une structure (6) de tissu ou de fils par le dispositif (3) répartiteur,
- **caractérisé en ce que** l'on utilise comme dispositif (5) répartiteur une ou plusieurs buses (7) ou rampes (8, 8') de buses déplacées suivant une cinétique pouvant être donnée à l'avance pour le dépôt de la matière fondue chaude sur le matériau (3) de filtre et **en ce que** l'épaisseur des fils (9) formant la couche (2) d'appui varie sur la surface du matériau (1) de filtre.

2. Procédé suivant la revendication 1, **caractérisé en ce que** l'on dépose la couche (2) d'appui sur toute la surface du matériau (1) de filtre.

3. Procédé suivant l'une des revendications précédentes, **caractérisé en ce que** l'on dépose respectivement une couche (2) d'appui des deux côtés du matériau (1) de filtre plat.

4. Procédé suivant la revendication 1, **caractérisé en ce que** l'on peut faire varier l'épaisseur des fils (9) formant la couche (2) d'appui en faisant varier la vitesse relative entre le matériau (1) de filtre et le dispositif (5) répartiteur et/ou en faisant varier le courant en volume de la masse fondue chaude.

5. Procédé suivant l'une des revendications précédentes, **caractérisé en ce que** la matière (3) plastique de la couche (2) d'appui contient de la matière plastique en poly (téréphtalate d'alcoylène) ou de la matière plastique en polypropylène ou de la matière plastique en polyéthylène.

6. Procédé suivant l'une des revendications précédentes, **caractérisé en ce que** l'on introduit dans la couche (2) d'appui des fils (9) en une matière conductrice de l'électricité.

7. Procédé suivant la revendication 6, **caractérisé en ce que** les fils (9) conducteurs de l'électricité sont en fibre (10) de carbone ou en fibre (11) métallique.

8. Procédé suivant l'une des revendications précédentes, **caractérisé en ce que** l'épaisseur des fils de la couche (2) d'appui est comprise entre 200 µm et 250 µm.

9. Procédé suivant l'une des revendications précédentes, **caractérisé en ce que** la couche (2) d'appui à une structure rectangulaire, ayant une première dimension de maille d'environ 1200 µm et une deuxième dimension de maille orientée transversalement à la première d'environ 800 µm.

10. Procédé selon l'une quelconque des revendications 1 à 8, **caractérisé en ce que** la couche (2) d'appui a une structure satinée ou une structure sergée ou une forme en losange, d'une dimension de maille dans une direction d'environ 1600 µm et dans l'autre direction d'environ 4300 µm.

11. Elément filtrant fabriqué par un procédé suivant l'une des revendications précédentes ayant une pluralité de plis de filtre individuels.

12. Elément suivant la revendication 11, **caractérisé en ce que** l'élément filtrant définit un espace de filtre sensiblement cylindrique.
